# EUROPÄISCHE PATENTSCHRIFT

(11) **EP 0 960 834 B1**
(45) Veröffentlichungstag und Bekanntmachung des Hinweises auf die Patenterteilung: **11.08.2004**
(21) Anmeldenummer: 99109465.7
(22) Anmeldetag: 12.05.1999
(51) Int. Cl.: B65D 85/672, B65H 75/18

(54) **Materialwickel sowie Verfahren und Vorrichtung zu seiner Erzeugung**
Material roll, method and device for its manufacturing
Rouleau de matériau ainsi que procédé et dispositif pour sa fabrication

(30) Priorität: 26.05.1998 DE 19823402
(43) Veröffentlichungstag der Anmeldung: 01.12.1999
(73) Patentinhaber: SIGNODE BERNPAK GmbH, D-46535 Dinslaken (DE)
(72) Erfinder: Schurig, Karl, 42897 Remscheid (DE)
(74) Vertreter: Patentanwälte Ostriga, Sonnet, Wirths & Roche

(56) Entgegenhaltungen:
- EP-A- 0 382 002
- DE-U- 9 315 668
- US-A- 3 865 325
- PATENT ABSTRACTS OF JAPAN vol. 199, no. 805, 30. April 1998 (1998-04-30) & JP 10 017216 A (MINNESOTA MINING), 10. Januar 1998 (1998-01-10)

## Beschreibung

Die Erfindung bezieht sich zunächst auf einen Materialwickel gemäß dem Oberbegriff des Anspruchs 1.

Im speziellen betrifft die Erfindung einen Materialwickel, der auch als "Bandspule" bezeichnet wird und ein in der Regel in Kreuzwicklung auf eine Kernhülse gewickeltes flachquerschnittiges thermoplastisches Band für Umreifungszwecke lagert.

Materialwickel mit Material aus schnurartigen, bändchenartigen oder bandförmigen Strängen aus textilem Fasermaterial, Monofilen od.dgl. weisen im allgemeinen eine formstabile Kernhülse auf sowie gegebenenfalls eine das fertig gewickelte Material auf der Außenseite rings umgebende Banderole bzw. Manschette.

Bei herkömmlichen Bandspulen besteht die Kernhülse aus einem Papprohr, welches zur Gewährleistung einer hohen Stabilität, insbesondere auch gegen die vom gewickelten Material ausgeübten radialen Kräfte, relativ dickwandig ist. Das kernhülsenseitige Ende des darauf aufzuwickelnden Materials wird üblicherweise mittels eines Klebestreifens an der Kernhülse bzw. an deren Oberfläche befestigt.

Kernhülsen aus Pappe haben den Vorzug, daß sie relativ preisgünstig sind. Sie haben andererseits aber den Nachteil, daß sie ein relativ hohes Gewicht aufweisen und vor allem auch ein beachtliches Volumen, so daß Transport und Lagerung einigen Aufwand erfordern. Des weiteren besteht ein nicht unbeträchtlicher Nachteil, wenn es um die Entsorgung solcher Kernhülsen geht, und zwar deshalb, weil sie in der Regel mit einem von der Bearbeitungsmaschine nicht mehr nutzbaren Rest an Material bewickelt sind. Sortenreines Recycling erfordert es daher, die Materialreste von der Papphülse abzuziehen und die beiden Materialien getrennt zu entsorgen.

Thermoplastische Kunststoffbänder für Umreifungszwecke bestehen in der Regel aus Polypropylen (PP) oder auch aus Polyetylen (PE), beides Kunststoffe, die relativ problemlos zu entsorgen sind. Bezüglich der Problemstellung der Entsorgung schlägt folgerichtig das DE 93 15 668 U1 als Kernhülse (dort *Innenhülse* genannt) einen Materialstreifen aus Kunststoff, insbesondere PP für den Materialwickel vor. Die Materialstärke dieser Kunststoffolie wird vorzugsweise mit 0,5 bis 1 mm, insbesondere mit etwa 0,7 mm gewählt. Die Innenhülse besteht aus einem steif-biegsamen Streifen aus solchem Kunststoff mit speziell ausgebildeten Endabschnitten, die es gestatten, das eine Streifenende in Form einer Zunge in eine am anderen Ende des Zuschnitts ausgebildete schlitzartige Öffnung derart einzustecken, daß die so aneinander befestigten Zuschnittenden der zylindrischen Innenhülse aneinander festgelegt sind.

Diese Ausgestaltung der Innenhülse aus einem steif-biegsamen Kunststoffstreifen erfordert eine maschinelle Konfektion, insbesondere hinsichtlich der Formgebung der Streifenenden. Des weiteren sind beim Ausbilden der Hülse aus dem Kunststoffstreifen geschickte Handhabungen erforderlich. Der Transport und die Lagerung der Innenhülse als noch nicht zur Hülse konfektionierter Kunststoffstreifen ist gegenüber dem eingangs erwähnten Stand der Technik erleichtert worden, doch sind auch hier eine spezielle Lagerhaltung und Vorkonfektionierung aufwendig.

Von dem genannten Stand der Technik ausgehend liegt der Erfindung daher im wesentlichen die Aufgabe zugrunde, einen dem gegenüber deutlich vereinfachten Materialwickel vorzuschlagen.

Die Erfindung löst diese Aufgabe durch die Merkmale des Anspruchs 1 und ist entsprechend dadurch gekennzeichnet, daß der Kunststoffstreifen aus einer klebstofflaminierten Folie besteht, deren mit Klebstoff ausgerüstete Oberfläche die dem Material zugekehrte Außenfläche der Kernhülse ausbildet.

Für die Erfindung ist zunächst wesentlich, daß sie Abstand nimmt von dem bisherigen Grundgedanken, die Kernhülse müsse, wie eine Papphülse, sehr steif als Rohrkörper ausgeführt sein oder, wie bei der Innenhülse entsprechend DE 93 15 668 U1, als steif-biegsames Gebilde. Der Erfindung liegt vielmehr die Erkenntnis zugrunde, daß das gewickelte Material selbst dem gesamten Materialwickel eine hohe Stabilität verleihen kann, insbesondere dann, wenn man die der Kernhülse zugewandte Materialfläche der ersten Wickellage mit der Kernhülse fest verklebt. Mit dieser Erkenntnis genügt es der Erfindung in überraschender Weise, die Kernhülse aus einer klebstoffbeschichteten Folie aus thermoplastischem Kunststoff wie Polypropylen (PP) oder Polyetylen (PE) auszubilden, wobei die die Kernhülse bildende Folie nur eine Stärke von etwa 20-30 µm aufweist. Daher ist es auch auf einfache Weise möglich, für die Folie denselben Kunststoff zu verwenden wie für das darauf aufzuwickelnde Material, womit die sortenreine Entsorgung absolut gewährleistet ist. Zum anderen kann als Folie zur Bildung der Kernhülse ein handelsüblicher Selbstklebefilm verwendet werden. Dabei kann es sich z.B. um einen Selbstklebefilm derjenigen Art handeln, wie er beispielsweise für ein Packband verwendet wird.

Damit zeichnet sich die Erfindung vor allem durch eine ungewohnte Einfachheit der Ausgestaltung insbesondere der Kernhülse aus.

Des weiteren macht sich die Erfindung für den Fall, daß das Material ein übliches bandförmiges Material aus thermoplastischem Kunststoff für Umreifungsmaschinen ist, die Eigenart des Bandes selbst zunutze, dessen Oberfläche in der Regel aus Stabilitätsgründen profiliert ist. Die Oberflächen der einzelnen Wicklungslagen der Bandspule liegen daher haftreibungserhöhend aneinander, so daß der fertige Wickel, auch dann, wenn er horizontal transportiert wird, nicht auseinanderfällt. Gleichwohl sieht die Erfindung auch diesbezüglich noch eine weitere Stabilisierung vor durch eine die Außenseite des gewickelten Materials als Manschette straff umgebende, auf der zum Material weisenden Seite klebstoffbeschichtete Kunststoffolie mit einer abstehenden, klebstofffreien bzw. klebstoffneutralisierten Aufreißlasche.

Sodann betrifft die Erfindung ein einfaches Verfahren zur Erzeugung eines Materialwickels der genannten Art. Dieses Verfahren ist gekennzeichnet durch folgende Schritte:
a) zur Bildung der Kernhülse des Materialwickels wird ein klebstofflaminierter Folienstreifen mit seiner der klebstoffbeschichteten Oberfläche entgegengesetzten Außenfläche um einen im wesentlichen kreiszylindrischen Tragdorn gewickelt,
b) durch Verkleben überlappender Folienabschnitte (Überlappungsbereich) wird der Folienstreifen auf dem Tragdorn fixiert,
c) der Anfang eines aufzuwickelnden Materials wird an die klebstoffbeschichteten Außenfläche der Kernhülse angeheftet,
d) der Tragdorn wird in Rotation um seine Längsachse versetzt, bis der Materialwickel die gewünschte Materialmenge aufweist, und
e) der Materialwickel wird vom Tragdorn entnommen,
   wobei noch ein weiterer Schritt, nämlich
f. auf den Materialwickel wird außenseitig eine selbstklebende Kunststoffolie umlaufend als Manschette straff aufgebracht,
erfolgen kann, wobei dieser Schritt vor oder im Anschluß an den Schritt e) ausgeführt wird.

Schließlich schlägt die Erfindung noch eine Vorrichtung zur Ausübung dieses verfahrens vor, welches dadurch gekennzeichnet ist, daß die Vorrichtung als Tragdorn einen Spreizdorn mit im wesentlichen radial zu seiner Drehachse verstellbaren Segmenten umfaßt, die nach Fertigstellung des Materialwickels durchmesserverringernd eingezogen werden, um den Materialwickel vom Spreizdorn freizugeben.

Die Behandlung der Kernhülse erfordert für die Bewicklung mit Material lediglich den recht einfach ausgebildeten Spreizdorn. Bei der Verarbeitung des Materialwickels, also für seine Lagerung während des Materialverbrauchs, sind indes keine weiteren besonderen Einrichtungen vorgesehen. Es können die herkömmlichen Wickeldorne bzw. Lagerwalzen verwendet werden, auf denen auch bisher die konventionellen Materialwickel z.B. mit Papprohr als Kernhülse verarbeitet wurden.

Die Erfindung wird nachfolgend anhand eines in den Zeichnungen dargestellten Ausführungsbeispiels im einzelnen erläutert. In den Zeichnungen zeigen:
- Fig. 1: einen fertigen Materialwickel in perspektivischer Ansicht,
- Fig. 2: einen Materialwickel zu Beginn der Bewicklung einer Kernhülse mit Material, und
- Fig. 3: eine schematische Stirnansicht auf eine Lagerung der Kernhülse auf einem Spreizdorn.

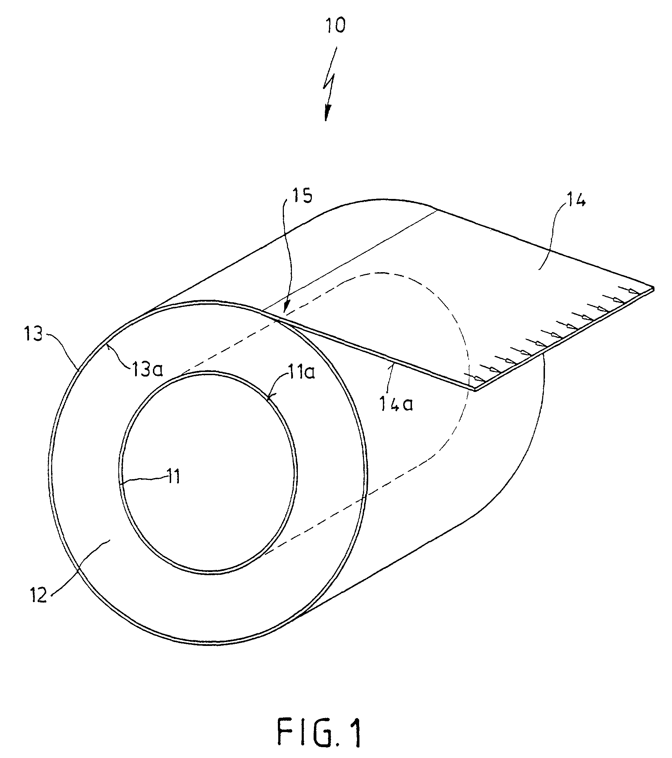

In Fig. 1 ist ein komplett fertiggestellter Materialwickel mit der Bezugsziffer 10 bezeichnet. Er besteht aus einer Kernhülse 11, dem darauf gewickelten Material 12 und einer die Außenseite des gewickelten Materials 12 manschettenartig umgebenden Kunststoffolie 13 mit einer endseitigen Aufreißlasche 14.

Die Kernhülse 11 besteht aus einem filmartigen, zylindrisch gewickelten Kunststoffstreifen mit einer klebstoffbeschichteten Außenfläche 11a. Die äußere Kunststoffolie 13 ist auf ihrer Innenseite 13a ebenfalls klebstofflaminiert. Die Aufreißlasche 14 weist auf ihrer zum Wickel weisenden Unterfläche 14a entweder keine Klebstoffbeschichtung auf oder ihre Klebstoffbeschichtung ist z.B. dadurch neutralisiert, daß ein Endabschnitt der Kunststoffolie 13 zur Bildung der Aufreißlasche 14 derart doppellagig gefaltet ist, daß die Kunststoffflächen aneinanderkleben. Bezüglich der sehr schematischen Fig. 1 sei noch darauf hingewiesen, daß in dem mit 15 bezeichneten Bereich, in dem die Aufreißlasche 14 beginnt, zweckmäßig eine Überlappung vorliegen sollte, damit gewährleistet ist, daß der selbstklebende Kunststoffstreifen 13 in jedem Falle mindestens die gesamte Außenfläche des gewickelten Materials 12 umgibt.

Die beachtliche Stabilität des Materialwickels 10 entsprechend Fig. 1 resultiert zum einen daraus, daß die kernhülsennahe erste Wickellage des Materials 12 fest mit der Kernhülse verklebt ist. Eine weitere Stabilitätsverbesserung kommt durch das straffe Banderolieren des fertiggewickelten Materials 12 mit dem Kunststoffstreifen 13 zustande. Ein derartiger Wickel ist auch dann, wenn er auf seiner kreiszylindrischen Fläche aufsteht und gegebenenfalls auch unter Erschütterungen transportiert wird, in sich derart stabil, daß er praktisch keinerlei nachteilige Formänderung erleidet.

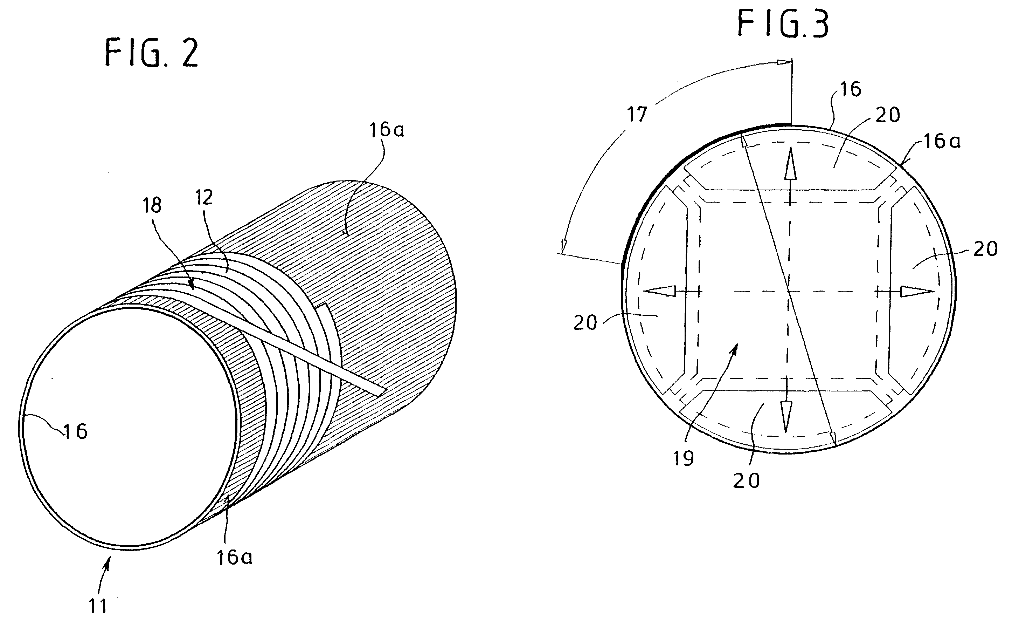

Fig. 2 zeigt schematisch die aus einer dünnen, auf der Außenseite 16a klebstofflaminierten Kunststoffolie 16, die zu der Kernhülse 11 gewickelt worden ist. Die überlappenden Endabschnitte sind in Fig. 2 nicht dargestellt, jedoch ist in Fig. 3, die später erläutert wird, der Überlappungsbereich schematisch dargestellt und mit 17 bezeichnet.

Wie Fig. 2 erkennen läßt, wird die erste Wickellage 18 eines Materials 12, hier eines flachquerschnittigen Kunststoffbandes, unmittelbar auf der klebenden Oberfläche 16a aufgebracht. In vorliegendem Fall ist die Wicklung in der Mitte der Kernhülse begonnen worden und vollzieht sich zunächst bezüglich Fig. 2 nach links, wohingegen die nächste Wicklung bis zum rechten Ende der Kernhülse geführt wird (sog. Kreuzspulenwicklung). Bezüglich der klebenden Oberfläche 16a bilden also die erste Hälfte der ersten und die zweite Hälfte der zweiten Wickellage die mit der Klebstoffschicht in Berührung gelangende Materiallage aus. Sodann wird der Wickel fertiggestellt, und zwar mit einer relativ geringen Zugkraft bzw. Wickelspannung, damit das gewickelte Material selbst keine unzulässigen Verformungen erfährt.

Zur Bewicklung der labilen Kunststoffolie 16 für die Innenhülse 11 benutzt man, wie dies in Fig. 3 dargestellt ist, einen Spreizdorn 19 mit beim Ausführungsbeispiel vier im wesentlichen radial verstellbaren Segmenten 20. Befinden sich diese in ihrer mit durchgezogenen Linien und mit Pfeilen angedeuteten Außenstellung, wird die Selbstklebefolie 16, mit ihrer Klebstoffschichtseite 16a nach außen weisend, um die in etwa einen Kreiszylinder beschreibenden Außenflächen der gespreizten Segmente gewickelt, wobei im Bereich der Überlappung 17 die sich hier berührenden Folienenden gegeneinander geklebt werden.

Jetzt kann der anhand von Fig. 2 beschriebene Wickelvorgang einsetzen, nach dessen Abschluß die Segmente 20 zum Zentrum des Spreizdorns 19 hin eingezogen werden, so daß der fertige Materialwickel, der auf dem Spreizdorn oder später, mit der anhand von Fig. 1 geschilderten Außenmanschette 13 umgeben wird, von der Wickelvorrichtung leicht abgenommen werden kann.

## Patentansprüche

1. Materialwickel (10), insbesondere Umreifungsmittelwickel für Material (12) zum Umreifen von Packstücken, mit einer Kernhülse (11) aus einem flexiblen Kunststoffstreifen (16), dessen Enden einander überlappend (17) miteinander verbunden sind und wobei die dem darauf zu wickelnden Material (12) zugekehrte Außenfläche der Kernhülse (11) eine einem Gleiten des Materials (12) auf dieser Fläche entgegenwirkende Beschaffenheit aufweist, **dadurch gekennzeichnet, daß** der Kunststoffstreifen (16) aus einer klebstofflaminierten Folie besteht, deren mit Klebstoff ausgerüstete Oberfläche (16a) die dem Material (12) zugekehrte Außenfläche der Kernhülse (11) ausbildet.

2. Materialwickel nach Anspruch 1, **dadurch gekennzeichnet, daß** die Folie (16) der Kernhülse (11) aus thermoplastischem Kunststoff wie Polypropylen (PP), Polyethylen (PE) od. dgl. besteht.

3. Materialwickel nach Anspruch 1 oder 2, **dadurch gekennzeichnet, daß** die Folie (16) der Kernhülse (11) aus dem gleichen Material besteht wie das auf sie aufzuwickelnde Material.

4. Materialwickel nach einem der Ansprüche 1 bis 3, **dadurch gekennzeichnet, daß** die Folie (16) der Kernhülse (11) eine Stärke von etwa 20-40µm aufweist.

5. Materialwickel nach einem der vorhergehenden Ansprüche, **dadurch gekennzeichnet, daß** die Kernhülse (11) aus einem handelsüblichen Selbstklebefilm, wie Packband od. dgl., gebildet ist.

6. Materialwickel nach einem der vorhergehenden Ansprüche, **dadurch gekennzeichnet, daß** die Kernhülse (11) nach Art eines handelsüblichen Selbstklebefilms, jedoch mit Polypropylen (PP) als Material für die Kunststoffolie (16), ausgebildet ist.

7. Materialwickel nach einem der vorhergehenden Ansprüche, **gekennzeichnet durch** eine Beschaffenheit der Klebstoffschicht (16a) derart, daß sich an ihr haftendes Material (12) von der Klebstoffschicht wieder abziehen läßt, ohne daß Klebstoffpartikel an das Material (12) übertragen werden.

8. Materialwickel nach einem der vorhergehenden Ansprüche, **gekennzeichnet durch** eine die Außenseite des gewickelten Materials (12) als Manschette straff umgebende, auf der zum Material (12) weisenden Seite klebstofflaminierte Kunststoffolie (13).

9. Materialwickel nach Anspruch 9, **dadurch gekennzeichnet, daß** die Manschette mit einer abstehenden, klebstofffreien bzw. klebstoffneutralisierten Aufreißlasche (14) versehen ist.

10. Verfahren zur Erzeugung eines Materialwickels mit einer Kernhülse (11) nach einem der vorhergehenden Ansprüche, **gekennzeichnet durch** folgende Schritte:
a) zur Bildung der Kernhülse (11) des Materialwickels (10) wird ein klebstofflaminierter Folienstreifen (16) mit seiner der klebstoffbeschichteten Oberfläche (16a) entgegengesetzten Außenfläche um einen im wesentlichen kreiszylindrischen Tragdorn (19) gewickelt,
b) **durch** Verkleben überlappender Folienabschnitte (Überlappungsbereich 17) wird der Folienstreifen (16) auf dem Tragdorn (19) fixiert,
c) der Anfang (18) eines aufzuwickelnden Materials (12) wird an die klebstoffbeschichteten Außenfläche (16a) der Kernhülse (11) angeheftet,
d) der Tragdorn (19) wird in Rotation um seine Längsachse versetzt, bis der Materialwickel (10) die gewünschte Materialmenge aufweist, und
e) der Materialwickel wird vom Tragdorn (19) entnommen.

11. Verfahren nach Anspruch 10, **gekennzeichnet durch** den weiteren Schritt
f. auf den Materialwickel (10) wird außenseitig eine selbstklebende Kunststoffolie (13) umlaufend als Manschette straff aufgebracht,
und **dadurch**, daß dieser Schritt vor oder im Anschluß an Schritt e) nach Anspruch 9 ausgeführt wird.

12. Vorrichtung zur Ausübung des Verfahrens nach Anspruch 10 oder 11, **dadurch gekennzeichnet, daß** die Vorrichtung als Tragdorn einen Spreizdorn (19) mit im wesentlichen radial zu seiner Drehachse verstellbaren Segmenten (20) umfaßt, die nach Fertigstellung des Materialwickels (10) durchmesserverringernd eingezogen werden, um den Materialwickel (10) vom Spreizdorn (19) freizugeben.

## Claims

1. Reel of material (10), in particular central strapping reel for material (12) for strapping packages, with a core sleeve (11) made of a flexible plastics material strip (16), the ends of which are connected to one another overlapping one another and wherein the outer face of the core sleeve (11) facing the material (12) to be wound thereon is of a nature which counteracts sliding of the material (12) on this face, **characterised in that** the plastics material strip (16) consists of an adhesive-laminated foil, the surface (16a) of which, equipped with adhesive, forms the outer face of the core sleeve (11) facing the material (12).

2. Reel of material according to claim 1, **characterised in that** the foil (16) of the core sleeve (11) consists of thermoplastic plastics material such as polypropylene (PP), polyethylene (PE) or similar.

3. Reel of material according to claim 1 or 2, **characterised in that** the foil (16) of the core sleeve (11) consists of the same material as the material to be wound thereon.

4. Reel of material according to one of claims 1 to 3, **characterised in that** the foil (16) of the core sleeve (11) has a thickness of approximately 20-40µm.

5. Reel of material according to one of the preceding claims, **characterised in that** the core sleeve (11) is formed from a commercially available self-adhesive film, such as packaging tape or similar.

6. Reel of material according to one of the preceding claims, **characterised in that** the core sleeve (11) is formed in the manner of a commercially available self-adhesive film, but with polypropylene (PP) as the material for the plastics material foil (16).

7. Reel of material according to one of the preceding claims, **characterised by** a nature of the adhesive layer (16a) of such a kind that material (12) which adheres to it can be pulled away from the adhesive layer again, without the adhesive particles being transferred to the material (12).

8. Reel of material according to one of the preceding claims, **characterised by** a plastics material foil (13) tightly surrounding the outside of the wound material (12) as a packing ring and adhesive-laminated on the side pointing towards the material (12).

9. Reel of material according to claim 9, **characterised in that** the packing ring is provided with a sticking-out adhesive-free or adhesive-neutralised tear-off tongue (14).

10. Method for producing a reel of material with a core sleeve (11) according to one of the preceding claims, **characterised by** the following steps:
a) for forming the core sleeve (11) of the reel of material (10) an adhesive-laminated foil strip (16) is wound with its outer face opposite the adhesive-coated surface (16a) round a substantially circular cylindrical support mandrel (19),
b) the foil strip (16) is fixed on the support mandrel (19) by gluing overlapping foil sections (overlapping area 17),
c) the front end (18) of a material (12) to be wound is stuck to the adhesive-coated outer face (16a) of the core sleeve (11),
d) the support mandrel (19) is set in rotation about its longitudinal axis until the reel of material (10) has the desired amount of material and
e) the reel of material is removed from the support mandrel (19).

11. Method according to claim 10, **characterised by** the further step
f) a self-adhesive plastics material foil (13) is tightly applied to the outside of the reel of material (10) as a circulating packing ring
and in that this step is carried out before or following step e) according to claim 9.

12. Device for practising the method according to claim 10 or 11, **characterised in that** the device comprises as support mandrel an expansion mandrel (19) with segments (20) adjustable substantially radially to its axis of rotation, which, after the reel of material (10) has been completed, are pulled in so as to reduce the diameter, in order to release the reel of material (10) from the expansion mandrel (19).

## Revendications

1. Bobine de matériau (10), en particulier bobine de moyen de cerclage pour matériau (12) pour le cerclage de paquets, comportant un noyau (11) fait d'une bande souple de plastique (16) dont les extrémités sont jointes en recouvrement (17), et dans laquelle la surface extérieure du noyau (11) dirigée vers le matériau à enrouler (12) présente un état qui s'oppose au glissement du matériau (12) sur cette surface, **caractérisée par le fait que** la bande de plastique (16) est constituée d'une feuille revêtue d'adhésif dont la surface pourvue d'adhésif (16a) forme la surface extérieure du noyau (11) dirigée vers le matériau (12).

2. Bobine de matériau selon la revendication 1, **caractérisée par le fait que** la feuille (16) du noyau (11) est en thermoplastique tel que polypropylène (PP), polyéthylène (PE) ou plastique semblable.

3. Bobine de matériau selon l'une des revendications 1 et 2, **caractérisée par le fait que** la feuille (16) du noyau (11) est constituée du même matériau que celui à enrouler sur celui-ci.

4. Bobine de matériau selon l'une des revendications 1 à 3, **caractérisée par le fait que** la feuille (16) du noyau (11) a une épaisseur d'environ 20 à 40 µm.

5. Bobine de matériau selon l'une des revendications précédentes, **caractérisée par le fait que** le noyau (11) est formé d'un film autocollant courant du commerce tel que bande pour emballage ou film semblable.

6. Bobine de matériau selon l'une des revendications précédentes, **caractérisée par le fait que** le noyau (11) est fait à la manière d'un film autocollant courant du commerce, mais avec polypropylène (PP) comme matériau de la feuille de plastique (16).

7. Bobine de matériau selon l'une des revendications précédentes, **caractérisée par** un état de la couche de plastique (16a) tel que le matériau (12) qui adhère à celle-ci puisse en être retiré sans que des particules d'adhésif soient transmises au matériau (12).

8. Bobine de matériau selon l'une des revendications précédentes, **caractérisée par** une feuille de plastique (13) qui est revêtue d'adhésif sur sa face dirigée vers le matériau (12) et entoure tendue, comme manchon, le côté extérieur du matériau (12) enroulé.

9. Bobine de matériau selon la revendication 9, **caractérisée par le fait que** le manchon est pourvu d'une languette d'arrachage saillante (14) sans adhésif ou à adhésif neutralisé.

10. Procédé de production d'une bobine de matériau comportant un noyau (11) selon l'une des revendications précédentes, **caractérisé par** les étapes suivantes :
a) pour la formation du noyau (11) de la bobine de matériau (10), une bande de feuille revêtue d'adhésif (16) est enroulée, avec sa face extérieure opposée à la surface revêtue d'adhésif (16a), autour d'un mandrin support sensiblement cylindrique (19),
b) la bande de feuille (16) est fixée sur le mandrin support (19) par collage de parties en recouvrement de là feuille (zone de recouvrement 17),
c) le début (18) du matériau à enrouler (12) est attaché à la surface extérieure revêtue d'adhésif (16a) du noyau (11),
d) le mandrin support (19) est soumis à rotation autour de son axe longitudinal jusqu'à ce que la bobine de matériau (10) présente la quantité désirée de matériau, et
e) la bobine de matériau est enlevée du mandrin support (19).

11. Procédé selon la revendication 10, **caractérisé par** l'étape supplémentaire suivante :
f) tout autour du côté extérieur de la bobine de matériau (10) est appliquée tendue, comme manchon, une feuille de plastique autocollante (13),
et par le fait que cette étape est exécutée avant ou après l'étape e) de la revendication 9.

12. Dispositif pour la mise en oeuvre du procédé selon l'une des revendications 10 et 11, **caractérisé par le fait qu'**il comprend comme mandrin support un mandrin à expansion (19) comportant des segments (20) mobiles sensiblement radialement par rapport à son axe de rotation et qui, après achèvement de la bobine de matériau (10), sont rentrés avec diminution de diamètre pour libérer la bobine de matériau (10) du mandrin à expansion (19).
